# NEUE EUROPÄISCHE PATENTSCHRIFT

(11) **EP 0 222 799 B2**
(45) Veröffentlichungstag und Bekanntmachung des Hinweises auf die Entscheidung über den Einspruch: **18.05.1994**
(45) Hinweis auf die Patenterteilung: 14.11.1990
(21) Anmeldenummer: 86902793.8
(22) Anmeldetag: 06.05.1986
(51) Int. Cl.: C02F 7/00

(54) **VERFAHREN ZUR EINBRINGUNG VON SAUERSTOFF IN WASSER UND VORRICHTUNG ZUR DURCHFÜHRUNG DES VERFAHRENS**
PROCESS FOR INTRODUCING OXYGEN INTO WATER AND DEVICE FOR IMPLEMENTING THE PROCESS
PROCEDE POUR INTRODUIRE DE L'OXYGENE DANS DE L'EAU ET DISPOSITIF POUR METTRE EN OEUVRE CE PROCEDE

(30) Priorität: 07.05.1985 DE 8513370 U; 13.05.1985 DE 3517230; 15.04.1986 DE 8610203 U
(43) Veröffentlichungstag der Anmeldung: 27.05.1987
(73) Patentinhaber: PETERSEN, Fred, 22885 Barsbüttel (DE)
(72) Erfinder: PETERSEN, Fred, 22885 Barsbüttel (DE)
(74) Vertreter: Schmidt-Bogatzky, Jürgen, Dr. Ing. Huth, Dietrich & Partner
(86) Internationale Anmeldenummer: DE8600185
(87) Internationale Veröffentlichungsnummer: WO8606712

(56) Entgegenhaltungen:
- EP-A- 0 127 600
- EP-A- 0 152 618
- DD-B- 88 288
- DD-B- 94 329
- DE-A- 2 447 337
- DE-A- 3 150 834
- DE-A- 3 209 200
- FR-A- 2 021 562
- GB-A- 1 393 028

## Beschreibung

Die Erfindung betrifft ein Verfahren zum Einbringen von Sauerstoff in Wasser, insbesondere in Oberflächengewässer, bei dem die natürliche Schichtung des Wassers erhalten bleibt und bei dem in einem Steigrohr aufsteigende Luftblasen eine nach oben gerichtete Vertikalströmung bewirken, wodurch über die untere Öffnung des bis in das Tiefenwasser (Hypolimnion) hinabreichenden Steigrohres zusätzliches Tiefenwasser angesaugt und auf dem Weg nach oben mit den Luftblasen in Kontakt gebracht wird, wobei die aufgestiegene Restluft nach Abgabe eines Teils des enthaltenen Sauerstoffes über die obere Öffnung des Steigrohres, bei getauchter Bauweise des Gerätes über eine aufgesetzte und bis über die Oberfläche reichende Entgasungsleitung in die Atmosphäre entweichen kann, während das mit Sauerstoff angereicherte Wasser in ein Fallrohr eingespeist und durch dieses wieder in das Tiefenwasser eingeleitet wird, wobei im gesamten beschriebenen Wasserumlauf der Zutritt von Oberflächenwasser unterbunden wird, wobei eine Pumpe außerhalb des Steigrohres Tiefenwasser ansaugt und durch einen außerhalb des Steigrohres angeordneten Ejektor drückt, der Luft aus der Atmosphäre ansaugt und dem Wasser beimischt und das Wasser/Luft-Gemisch durch ein Gemischrohr in das Steigrohr eingebracht wird; sowie eine Vorrichtung zur Durchführung des Verfahrens.

Das einfachste Verfahren, an Sauerstoff verarmte Gewässer wieder mit Sauerstoff anzureichern, ist das Einblasen von Druckluft. Man verlegt z.B. an besonders tiefen Stellen perforierte Schläuche auf dem Grund, die über einen Kompressor mit Druckluft gespeist werden. Die aufsteigenden Luftblasen führen dabei aber nach dem Mammutpumpenprinzip zu einer vertikalen Wasserverfrachtung, die einen allmählichen Abbau der temperaturbedingten Wasserschichtung nach sich zieht. Führt man diesen Prozeß in Seen durch, die bereits weitgehend eutrophiert sind und infolge langzeitig auftretender Anaerobie in der Schlamm-Wasser-Kontaktzone eine umfangreiche Faulschlammschicht am Gewässerboden besitzen, so besteht die Gefahr, daß mit dem an die Oberfläche verfrachteten Tiefenwasser hier freigesetzte Nährstoffe (besonders Phosphate) in die trophogene Zone transportiert werden. Hierdurch kann es in der oberen Wasserschicht zu einer erneuten und noch umfangreicheren Bioproduktion kommen, besonders dann, wenn der See als Folge der Belüftungsmaßnahmen bereits während des Sommerzeitraumes in allen Tiefen gleiche Wassertemperaturen aufweist, so daß das an die Wasseroberfläche verfrachtete Tiefenwasser weitgehend hier verbleibt. Auf diese Weise erreicht man genau das Gegenteil des Gewünschten, nämlich eine Anregung der Bioproduktion in diesem Gewässer.

Außerdem besteht besonders in kleineren Seen durch die Verfrachtung des sauerstoffarmen Wassers an die Oberfläche zeitweise die Gefahr, daß die im Gewässer lebenden Fische plötzlich in allen Tiefen sauerstoffarmes Wasser vorfinden und an Sauerstoffmangel verenden. Dies tritt vor allem dann ein, wenn der Sauerstoffeintrag in das an die Oberfläche verfrachtete Wasser in der zur Verfügung stehenden Kontaktzeit für eine genügende Sauerstoffanreicherung nicht ausreicht. In stark eutrophierte Gewässer darf deshalb auf keinen Fall einfach Druckluft eingeblasen werden.

Um diese Nachteile zu vermeiden, ist bereits ein Belüftungsgerät entwickelt worden, bei dem die vertikale Durchmischung der Gewässerschichtung unterbleibt. Dieses Gerät ist in der ZS "Druckluft Kommentare" 1/80 beschrieben. Dabei steigt Druckluft über Filterkerzen in einem Steigrohr auf. Das mitgerissene Wasser hat intensiven Kontakt mit den aufsteigenden Luftblasen. Oben in dem Steigrohr befindet sich eine Entgasungskammer. Von hier aus wird das mit Sauerstoff angereicherte Wasser über ein um das Steigrohr konzentrisch angeordnetes Fallrohr und von diesem strahlenförmig ausgehenden Verteilerrohren in den See zurückgeleitet. Der Prozeß spielt sich in der Regel im Hypolimnion ab. An die Oberfläche führt nur eine Entgasungsleitung, über die die Luft aus der Entgasungskammer entweichen kann. Dieses Verfahren hat den Nachteil, daß es mit Druckluft gespeist werden muß, was einen Kompressor bedingt. Alle Kompressoren arbeiten aber mit sehr schlechtem Wirkungsgrad. Zudem ist die Leistung verloren, die benötigt wird, um die Luft überhaupt erst einmal in die jeweilige Wassertiefe zu drücken. Weiterhin sind Kompressoren wartungsintensiv, insbesondere bei Forderung nach unverölter Druckluft teuer, unterliegen dem Verschleiß und können durch ihre Geräuscherzeugung selbst wieder zur Umweltbelastung werden. Insgesamt ist das bekannte Verfahren aus Kostengründen häufig nicht realisierbar.

Ein Verfahren der eingangs genannten Art ist auch nach der DE-A 31 50 834 bekannt. Die in dieser Druckschrift beschriebene Vorrichtung arbeitet ebenfalls voll getaucht und nutzt das Mammutpumpenprinzip, wobei in dem Steigrohr eine Tauchmotorpumpe mit einem direkt daran angeschlossenen Wasserstrahlverdichter angeordnet ist. Der Saugteil des Wasserstrahlverdichters ist mit einer in die freie Atmosphäre führenden Zuluftleitung verbunden. Mittels der mechanischen Pumpe wird ein Teilwasserstrom abgezweigt und über den Wasserstrahlverdichter für den Lufteintrag genutzt. Das mit Luft versehene Wasser wird mittels eines Falleitungssystems wieder in die Seetiefe gebracht. Der Einsatz eines Kompressors wird vermieden.

Die Pumpe entnimmt das Treibwasser für den Ejektor aus dem Steigrohr. Es ist grundsätzlich ein separates Steigrohr mit einer gehäuseartigen Erweiterung zur Aufnahme des Pumpenaggregates und des Ejektors vorgesehen, kombiniert mit mehreren separaten Fallrohren, die mit ihren unteren Enden über ein torusartige Verbindungseitung in einzelne Verteilerrohre münden.

Ein Verfahren der eingans genannten Art ist ebenfalls aus DD-B-94329 und DD-A-88283 bekannt.

Die Aufgabe der Erfindung ist es, ein Verfahren und eine Vorrichtung zu dessen Durchführung zu schaffen, durch das die Nachteile und Mängel dieser bekannten Verfahren beseitigt werden.

Erfindungsgemäß erfolgt die Lösung der Aufgabe bezüglich des Verfahrens durch die kennzeichnenden Merkmale des Anspruchs 1 und bezüglich der Vorrichtung alternativ durch die kennzeichnenden Merkmale der Ansprüche 4 und 5. Vorteilhafte Ausgestaltungen der Erfindung werden in den abhängigen Ansprüchen beschrieben.

Die Vorrichtung zur Durchführung des Verfahrens umfaßt eine Pumpe zur vertikalen Förderung von Tiefenwasser durch ein senkrechtes Steigrohr und einen Ejektor zum Ansaugen von atmosphärischer Luft, die in das im Steigrohr aufsteigende Tiefenwasser eingebracht wird, wobei die Pumpe außerhalb des Steigrohres angeordnet und entweder als direkt aus der unmittelbaren Umgebung ansaugende Tauchpumpe ausgebildet und selbst im Hypolimnion angeordnet oder aber über eine Saugleitung saugseitig mit einem Saugkorb verbunden ist, der sich im Hypolimnion befindet, wobei die Pumpe über eine Druckleitung druckseitig mit einem ebenfalls außerhalb des Steigrohres angeordneten Ejektor verbunden ist, der direkt oder über eine Schnorchelleitung mit der Atmosphäre in Verbindung steht und austrittsseitig mit einem Gemischrohr verbunden ist, das in das Steigrohr, in der unteren Öffnung des Steigrohrs oder direkt unter dessen unterer Öffnung mündet, wobei am oberen Endabschnitt des Steigrohrs das mit Sauerstoff angereicherte Wasser wieder in ein an sich bekanntes Fallrohr mit im Tiefenwasser befindlicher unterer Öffnung einspeisbar und das Restgas in die Atmosphäre entweichbar ist.

Die Kreiselpumpe saugt aus dem Hypolimnion Tiefenwasser an und drückt dieses Wasser durch die Strahldüse eines Ejektors. Der Ejektor saugt Luft an und mischt sie dem Druckwasser in Form feiner Bläschen bei. Das luftblasendurchsetzte Wasser wird in einem Gemischrohr bzw. -schlauch wieder abwärts gedrückt, um von unten oder auch von der Seite in ein Steigrohr entlassen zu werden. Dort sorgen die Luftblasen durch ihren Auftrieb für eine zusätzliche nach oben gerichtete Strömung. Das Steigrohr ist unten offen. Die untere Öffnung befindet sich im Hypolimnion. Durch die aufwärts gerichtete Vertikalströmung im Steigrohr wird so zusätzliches Tiefenwasser mit geringer Strömungsgeschwindigkeit angesaugt, ohne daß dadurch Bodenablagerungen aufgewirbelt und mitgerissen werden. Im Steigrohr haben die fein verteilten Luftbläschen intensiven Kontakt mit dem Tiefenwasser, das sehr schnell Sauerstoff aufnimmt, weil es kalt und an Sauerstoff völlig ungesättigt ist.

Die im Ejektor erzeugte geringe Bläschengröße wirkt sich jetzt doppelt verteilhaft aus:

Es ergibt sich eine relativ große Kontaktfläche Wasser/Luft.

Aufgrund der Zähigkeit des Wassers in Relation zum geringen Auftrieb des einzelnen Bläschens steigen die Bläschen nur langsam auf. Das führt zu einer relativ großen Verweilzeit im Steigrohr und zu einem guten Sauerstoffaustausch.

Oben entweicht das Restgas aus dem Steigrohr in die Atmosphäre. Das mit Sauerstoff angereicherte Tiefenwasser fließt in einem vorzugsweise konzentrisch um das Steigrohr angeordneten Mantelrohr wieder ins Hypolimnion zurück, wobei auch ein separates Fallrohr angeordnet werden kann. Am unteren Ende des Mantel- oder Fallrohrs strömt das mit Sauerstoff angereicherte Wasser über einen Verteiler vorzugsweise zu den Seiten hin ab. Durch den Verteiler wird das erneute Ansaugen des aufbereiteten Wassers durch das Saugrohr der Kreiselpumpe oder durch das Steigrohr und somit ein Kurzschluß verhindert. Das aufbereitete Wasser verteilt sich gleichmäßig zu den Seiten hin im Gewässer.

Bei konzentrischer Bauweise von Steig- und Fallrohr als Mantelrohr ist die Entgasungskammer vorzugsweise als Erweiterung des Mantelrohres ausgebildet, wobei der gegenüber dem Fallrohr vergrößerte Durchmesser der Entgasungskammer erst unterhalb der oberen Mündung des Steigrohres z.B. vorteilhaft konisch auf den Fallrohrdurchmesser verjüngt wird. So läßt sich die Geschwindigkeit des in das Fallrohr hineinströmenden Wassers niedrig halten. Das reduziert die Gefahr, daß Luftblasen in das Fallrohr mitgerissen werden.

Das Gerät kann oben mit einem Schwimmkörper versehen werden, so daß es selbsttätig in der Senkrechten und auch in der richtigen Höhenlage zur Wasseroberfläche schwimmt. Das schwimmende Gerät läßt sich leicht zu einem anderen Standort verlegen.

Am Einsatzort wird das Gerät verankert. Das kann über eine einzelne Ankerleine unten am Gerät erfolgen, wobei die Ankerleine z.B. durch das Steigrohr oder durch eine Öse unten am Gerät nach oben geführt wird. Ist der, Schwimmkörper genügend groß dimensioniert, so daß er den Anker tragen kann, so braucht der Anker nur z.B. über eine Handwinde angehoben zu werden, um das Gerät zu einem neuen Standort zu verlegen.

Naturgemäß kann das Gerät auch konventionell verankert werden, z.B. mit zwei oder drei Ankern, deren Leinen direkt am Schwimmkörper befestigt werden.

Um das Gerät in annähernd waagerechter Lage auf flachem Wasser, z.B. in der Uferzone, schwimmend transportieren zu können, kann es am unteren Ende mit einem zweiten Schwimmkörper versehen werden, der z.B. aufblasbar oder als fester Tank mit Druckluft ausblasbar ausgebildet ist. Es können auch mehrere einzelne Schwimmkörper am unteren Ende des Gerätes es angeornet werden. Zumin dest sollte immer eine Sorgeleine am unteren Ende des Gerätes befestigt sein, die es ermöglicht, das Unterende von einem Hilfsfahrzeug aus anzuheben und damit das Gerät in die Waagerechte zu bringen.

Besonders vorteilhaft ist die getauchte Ausgestaltung des Gerätes, die sich unauffällig und vor allem eissicher installieren läßt. Weiterhin läßt sich durch die getauchte Installation eine Gefährdung der Schiffahrt weitgehend vermeiden. Bei getauchter Ausführung des Gerätes muß die Entgasungskammer oben geschlossen sein. Nur eine Entgasungsleitung führt zur Gewässeroberfläche. Die Entgasungsleitung kann dort z.B. zusammen mit der Schnorchelleitung für die Luftzufuhr zum Ejektor von einer Boje oder einem sonstigen Schwimmkörper getragen werden. Die Anordnung eines verstellbaren Drosselventiles in der Entgasungsleitung ermöglicht die feinfühlige Einstellung eines Abgas-Gegendruckes, so daß sich im oberen Teil der Entgasungskammer ein Gaspolster über einer freien Oberfläche ausbildet. Das führt zu einer sehr effektiven Entgasung und verhindert, daß Wasser in die Entgasungsleitung mitgerissen wird.

Das Gesamt-Gerät arbeitet energetisch sehr effektiv. Der Ejektor erzeugt bei geeigneter Auslegung kleine und gleichmäßig verteilte Luftbläschen, die bereits im Gemischrohr zu intensivem Gasaustausch führen und denen dann im Steigrohr aufgrund der relativ langen Verweilzeit noch weiterer Sauerstoff entzogen werden kann. Die ursprünglich von der Pumpe aufgebrachte kinetische Energie des Gemischstrahls geht nicht verloren, sondern sorgt für eine intensive Verwirbelung des Wasser/Luft-Gemisches, also für einen noch besseren Gasaustausch, und wird auch noch zum Ansaugen zusätzlichen Tiefenwassers über das unten offene Steigrohr genutzt. Besonders wirkungsvoll arbeitet das beschriebene Verfahren mit einer Niederdruckpumpe und relativ geringem Luftanteil im Gemischrohr.

Um den Einsatz einer das Bauvolumen verringernden kleinbauenden und preiswerten Hochdruck-Anlage zu ermöglichen, kann das Verfahren modifiziert werden. Dabei wird unten im Steigrohr die Luft durch eine über der Gemischrohrmündung angeordnete Strömungsleitvorrichtung grob über den gesamten Rohrquerschnitt verteilt. Nach oben hin schließen sich dann ein oder mehrere statische Mischer an. Diese zerteilen die Luft in feinste Bläschen und sorgen für ein homogenes Gemisch. Es ist deshalb weniger wichtig, bereits mit dem Ejektor besonders feine Bläschen zu erzeugen. Letzteres ermöglicht einen hohen Luftanteil in dem vom Ejektor erzeugten Gemisch. Ein solches Gemisch läßt sich effektiv mit einem Hochdruck-Ejektor erzeugen, der relativ klein baut und von einer entsprechend kleinen Hochdruckpumpe mit Treibwasser versorgt wird.

Die statischen Mischer werden in de Regel in mehreren Stufen über die Länge des Steigrohres verteilt. Dadurch werden die Luftblasen, die sich aufgrund des auf ihrem Weg nach oben abnehmenden statischen Druckes ausdehnen, immer wieder zerteilt, so daß sich bezogen auf das Gesamtvolumen eine sehr große Kontaktfläche mit dem Wasser ergibt. Der Strömungswiderstand der statischen Mischer bremst die aufwärts gerichtete Strömung ab. Daraus resultiert eine längere Verweilzeit der Luft im Steigrohr, was den Sauerstoffaustausch zusätzlich erheblich begünstigt.

Gegenüber dem eingangs als Stand der Technik beschrieben, primärseitig mit einem Kompressor arbeitenden Gerät hat das erfindungsgemäße Belüftungsgerät den großen Vorteil, daß es primärseitig mit einer Kreiselpumpe arbeitet. Kreiselpumpen haben eine hohen Wirkungsgrad und sind nahezu wartungsfreie, einfache und störuhanfällige Maschinen. Sie sind im Vergleich zu einem Kompressor für ölfreie Druckluft extrem preiswert und zeigen kaum Verschleiß. Außerdem sind sie leise und umweltfreundlich und lassen sich zudem in das Belüftungsgerät integrieren. Ein Ufergrundstück mit einer Kompressorstation ist nicht erforderlich.

Die Erfindung wird im Folgenden am Beispiel der in den Zeichnungen dargestellten Ausgestaltungsmöglichkeiten für eine Vorrichtung zur Durchführung des erfindungsgemäßen Belüftungsverfahrens näher erläutert. Bei den Ausführungen der Vorrichtungen vorhandene gleiche Teile sind mit gleichen Bezugszeichen versehen. Es zeigt
- Fig 1 :: eine Vorrichtung in einer Seitenansicht im schematischen Schnitt
- Fig 2 :: eine Vorrichtung mit statischen Mischem in einer Seitenansicht im schematischen Schnitt

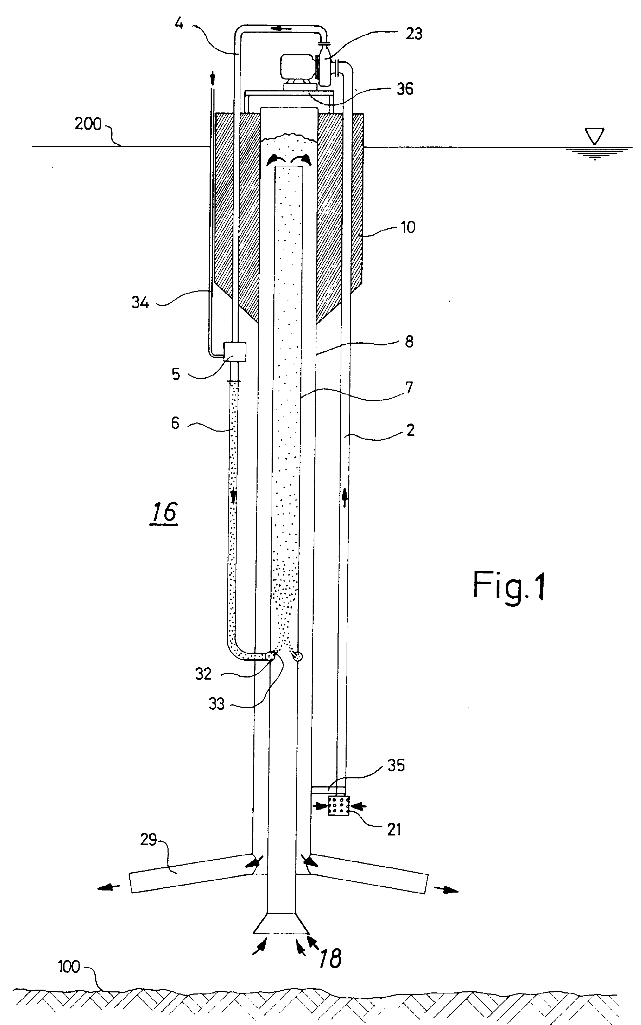

Fig. 1 zeigt ein weiteres Gerät 16, bei dem der Saugkorb 21 seitlich ansaugend ausgebildet und mit der Halterung 35 am Mantelrohr 8 oberhalb des Verteilers 29 gehaltert ist. Das Saugrohr 2 führt dann zu der auf dem Schwimmkörper 10 auf einem Fundament 36 angeordneten konventionellen und besonders preiswerten als Kreiselpumpe ausgebildeten Pumpe 23, die eine elektrisch angetriebene Block-Normpumpe sein kann, die vorteilhaft selbstansaugend ausgebildet ist. Die Druckleitung 4 führt zu dem jetzt unter Wasser angeordneten Ejektor 5, der die zuzumischende Luft über eine Schnorchelleitung 34 ansaugt. Das Gemischrohr 6 leitet das bläschendurchsetzte Wasser abwärts und unten in einen das Steigrohr 7 umhüllenden Ringkanal 32, aus dem das Luf/Wasser-Gemisch über Düsen 33 in das Steigrohr 7 eingeblasen wird. Anstelle einzelner Düsen ist hier auch eine umlaufende Ringschlitzdüse möglich. Vorteilhaft ist es, die Düsen schräg aufwärts zu richten. Das bewirkt zusammen mit dem Mammutpumpen-Effekt der aufsteigenden Luftbläschen wiederum das Ansaugen zusätzlichen Tiefenwassers über die untere Öffnung des Steigrohres 7, die trichterförmig erweitert ist Hier wird zusätzliches Tiefenwasser angesaugt. Oben fließt das mit Sauerstoff angereicherte Wasser über den Rand des Steigrohres 7 in das Mantelrohr 8, in dem es abwärts abfließt. Das mit Sauerstoff angereicherte Wasser fließt, den Pfeilen entsprechend unten über dem Verteiler 29 zu den Seiten hin ab der hier aus sternförmig angeordneten Rohren besteht. Der Verteiler 9 kann auch aus zwei übereinander angeordneten Scheiben bestehen, die leicht keglig ausgebildet sein können. Das Restgas entweicht aus dem oben offenen Mantelrohr 8 in die Atmosphäre.

Die Bauweise entsprechend Fig. 1 eignet sich besonders für den Einsatz von Niederdruck-Pumpenanlagen bei sehr tiefen Gewässern. Hier muß das Luf/Wasser-Gemischaus dem Ejektor nicht bis ganz hinab zum unteren Ende des Steigrohres 7 gedrückt werden. Der Ejektor kann auch unterhalb der Wasseroberfläche angeordnet werden und die Zuluft über eine Schnorchelleitung 34 ansaugen.

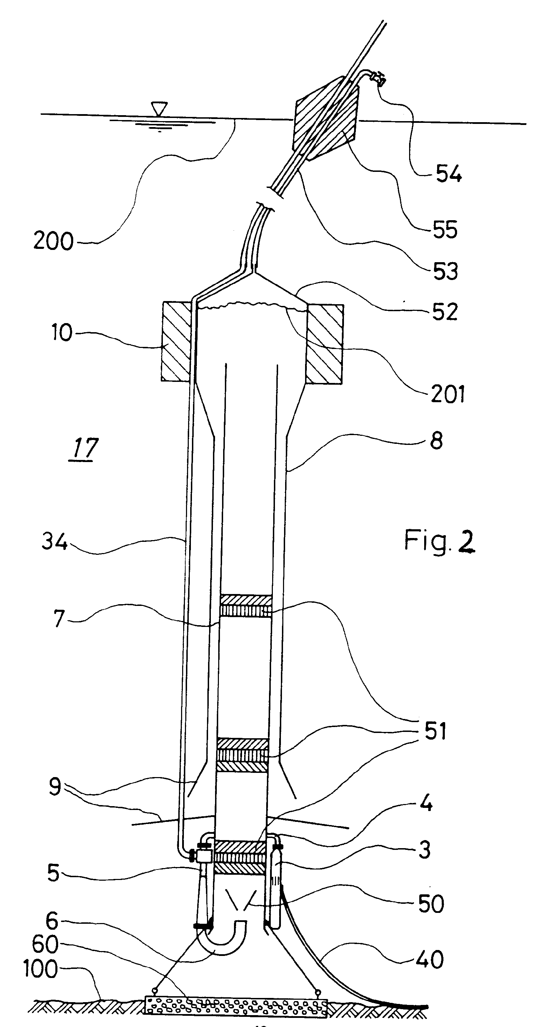

Fig.2 zeigt eine Ausgestaltung eines Geräts 17 in getauchter Bauform mit einer Hochdruck-Pumpenanlage. Die Pumpe 3 ist als elektrisch angetriebene Tauchmotorpumpe ausgebildet, die über ein Unterwasserkabel 40 mit Strom versorgt wird. Über die Druckleitung 4, die in der Zeichnung hinten um das Steigrohr 7 herumführt, wird der Ejektor 5 mit Treibwasser gespeist. Die Schnorchelleitung 34 versorgt den Ejektor mit atmosphärischer Luft. Das Gemischrohr 6 leitet das erzeugte Luft/Wasser-Gemisch von unten in das Steigrohr 7 ein, wo es auf die vorzugsweise keglig ausgebildete Strömungsleitvorrichtung 50 trifft und durch diese grob über den gesamten Querschnitt des Steigrohres 7 verteilt wird.

Im Steigrohr 7 sind in Abständen statische Mischer 51 angeordnet, die die aufsteigenden Luftblasen immer wieder zerteilen und das Gemisch homogenisieren. Oben fließt das mit Sauerstoff angereicherte Wasser über den Rand des Steigrohres 7 in das Mantelrohr 8, in dem es abwärts und unten über den Verteiler 9 mit stark reduzierter Strömungsgeschwindigkeit zu den Seiten hin abfließt.

Die statischen Mischer können aus geriffelten Lamellen aufgebaut sein, die offene sich kreuzende Kanäle bilden. Die Scherkräfte zwischen den Lamellen erzeugen kleine Blasen. Dabei findet eine laufende Erneuerung der Phasengrenzfläche durch Zusammentreffen der Blasen und deren Neubildung statt. Durch eine entsprechende Ausbildung der Mischelementgeometrie kann eine bestimmte gewünschte. Blasengröße erzeugt werden. Es ist auch möglich, als statische Mischer eine Anordnung von Tropfkörpern in das Steigrohr 7 einzusetzen, die ebenfalls eine homogene Verteilung der Luftblasen über den Rohr querschnitt ermöglichen.

Das Restgas entweicht über die freie Oberfläche 201 in der Entgasungskammer 52 und wird über die Abgasleitung 53 und das Ventil 54 in die Atmosphäre abgeblasen das als Drosselventil ausgebildet ist. Das Ende der Abgas leitung wird durch einen Schwimmkörper 55 an der Gewäs seroberfläche 200 gehalten. Der Schwimmkörper 55 trägt hier gleichzeitig die Schnorchelleitung 34 zum Ansaugen.

Diese Vorrichtung 17 besitzt oben einen als Auftriebskörper ausgebildeten Schwimmkörper 10. Unten ist sie an einem Ankerblock 60 befestigt und wird von diesem unter Wasser gehalten. Der Ankerblock 60 liegt auf dem Gewässerboden 100.

In allen Zeichnungen sind Verbindungselemente der Bauteile untereinander allgemein bekannt und zur Verdeutlichung der Darstellung nicht dargestellt.

## Patentansprüche

1. Verfahren zum Einbringen von Sauerstoff in Wasser, insbesondere in Oberflächengewässer, bei dem die natürliche Schichtung des Wassers erhalten bleibt und bei dem in einem Steigrohr aufsteigende Luftblasen eine nach oben gerichtete Vertikalströmung bewirken, wodurch über die untere Öffnung des bis in das Tiefenwasser (Hypolimnion) hinabreichenden Steigrohres zusätzliches Tiefenwasser angesaugt und auf dem Weg nach oben mit den Luftblasen in Kontakt gebracht wird, wobei die aufgestiegene Restluft nach Abgabe eines Teils des enthaltenen Sauerstoffes über die obere öffnung des Steigrohres, bei getauchter Bauweise des Gerätes über eine aufgesetzte und bis über die Oberfläche reichende Entgasungsleitung in die Atmosphäre entweichen kann, während das mit Sauerstoff angereicherte Wasser in ein Fallrohr eingespeist und durch dieses wieder in das Tiefenwasser eingeleitet wird, wobei im gesamten beschriebenen Wasserumlauf der Zutritt von Oberflächenwasser unterbunden wird, und wobei eine Pumpe außerhalb des Steigrohrstroms Tiefenwasser ansaugt und durch einen außerhalb des Steigrohrs angeordneten Ejektor drückt, der seinerseits gegebenenfalls über eine Schnorchelleitung Luft aus der Atmosphäre ansaugt und dem Wasser beimischt und das Wasser/Luft-Gemisch dann durch ein Gemischrohr in das Steigrohr eingebracht wird dadurch gekennzeichnet, daß das in dem Steigrohr aufwärts strömende Wasser/Luft Gemisch in diesem durch mindestens einen statischen Mischer fließt.

2. Verfahren nach Anspruch 1, dadurch gekennzeichnet, daß das Wasser/Luft-Gemisch durch eine vorzugsweise kegelig ausgebildete Strömungsleitvorrichtung in das Steigrohr geführt wird, wobei die Luftblasen in dem Wasser/Luft-Gemisch vor dem ersten statischen Mischer über den Querschnitt des Steigrohres verteilt werden.

3. Verfahren nach Anspruch 1, dadurch gekennzeichnet, daß das Wasser/Luft-Gemisch ejektorartig z.B. über einen Zentralstrahl-, Randstrahl- oder Ringstrahlejektor in das Steigrohr eingeblasen wird.

4. Vorrichtung zum Einbringen von Sauerstoff in Wasser, insbesondere in Oberflächengewässer, bei dem die natürliche Schichtung des Wassers erhalten bleibt und bei dem in einem Steigrohr (7) aufsteigende Luftblasen eine nach oben gerichtete Vertikalströmung bewirken, wodurch über die untere öffnung des bis in das Tiefenwasser (Hypolimnion) hinabreichenden Steigrohrs (7) zusätzliches Tiefenwasser angesaugt und auf dem Weg nach oben mit den Luftblasen in Kontakt gebracht wird, wobei die aufgestiegene Restluft nach Abgabe eines Teils des enthaltenen Sauerstoffes über die obere öffnung des Steigrohres (7), bei getauchter Bauweise des Gerätes über eine aufgesetzte und bis über die Oberfläche reichende Entgasungsleitung in die Atmosphäre entweichen kann, während das mit Sauerstoff angereicherte Wasser in ein Fallrohr (8) eingespeist und durch dieses wieder in das Tiefenwasser eingeleitet wird, wobei im gesamten beschriebenen Wasserumlauf der Zutritt von Oberflächenwasser unterbunden wird, mit einer Pumpe (23) zur vertikalen Förderung von Tiefenwasser durch das senkrechte Steigrohr (7) und einem Ejektor (5) zum Ansaugen von in das im Steigrohr (7) aufsteigende Tiefenwasser einzubringender atmosphärischer Luft, wobei die Pumpe (23) außerhalb des Steigrohres (7) angeordnet und entweder als direkt aus der unmittelbaren Umgebung ansaugende Tauchpumpe ausgebildet und selb im Hypolimnion angeordnet oder aber über eine Saugleitung (2) saugseitig mit einem Saugkorb (21) verbunden ist, der sich im Hypolimnion befindet, wobei die Pumpe (23) über eine Druckleitung (4) druckseitig mit einem ebenfalls außerhalb des Steigrohres (7) angeordneten Ejektor (5) verbunden ist, der direkt oder über eine Schnorchelleitung (34) mit der Atmosphäre in Verbindung steht und austrittsseitig mit einem Gemischrohr (6) verbunden ist, dadurch gekennzeichnet, daß das Gemischrohr in dem Steigrohr (7) in einen Ringkanal (32) mündet, an dem horizontal oder schräg aufwärts in das Steigrohr (7) gerichtet Einzeldüsen (33) oder eine umlaufende Ringschlitzdüse ausgebildet sind.

5. Vorrichtung zum Einbringen von Sauerstoff in Wasser, insbesondere in Oberflächengewässer, bei dem die natürliche Schichtung des Wassers erhalten bleibt und bei dem in einem Steigrohr (7) aufsteigende Luftblasen eine nach oben gerichtete Vertikalströmung bewirken, wodurch über die untere Öffnung des bis in das Tiefenwasser (Hypolimnion) hinabreichenden Steigrohrs (7) zusätzliches Tiefenwasser angesaugt und auf dem Weg nach oben mit den Luftblasen in Kontakt gebraucht wird, wobei die aufgestiegene Restluft nach Abgabe eines Teils des enthaltenen Sauerstoffes über die obere Öffnung des Steigrohres (7), bei getauchter Bauweise des Gerätes über eine aufgesetzte und bis über die Oberfläche reichende Entgasungsleitung in die Atmosphäre entweichen kann, während das mit Sauerstoff angereicherte Wasser in ein Fallrohr (8) eingespeist und durch dieses wieder in das Tiefenwasser eingeleitet wird, wobei im gesamten beschriebenen Wasserumlauf der Zutritt von Oberflächenwasser unterbunden wird, mit einer Pumpe (3) zur vertikalen Förderung von Tiefenwasser durch das senkrechte Steigrohr (7) und einem Ejektor (5) zum Ansaugen von in das im Steigrohr (7) aufsteigende Tiefenwasser einzubringender atmosphärischer Luft, wobei die Pumpe (3) außerhalb des Steigrohres (7) angeordnet und entweder als direkt aus der unmittelbaren Umgebung ansaugende Tauchpumpe ausgebildet und selbst im Hypolimnion angeordnet oder aber über eine Saugleitung (2) saugseitig mit einem Saugkorb (1) verbunden ist, der sich im Hypolimnion befindet, wobei die Pumpe (3) über eine Druckleitung (4) druckseitig mit einem ebenfalls außerhalb des Steigrohres (7) angeordneten Ejektor (5) verbunden ist, der direkt oder über eine Schnorchelleitung (34) mit der Atmosphäre in Verbindung steht und austrittsseitig mit einem Gemischrohr (6) verbunden ist, in das Steigrohr (7), in der unteren öffnung des Steigrohrs (7) oder direkt unter dessen unterer Öffnung mündet, dadurch gekennzeichnet, daß in dem Steigrohr (7) über dem Austritt des Gemischrohres mindestens ein statischer Mischer (51) angeordnet ist.

6. Vorrichtung nach einem der Ansprüche 4 und 5, dadurch gekennzeichnet, daß eine Entgasungskammer (52) als Erweiterung des Fallrohres (8) ausgebildet ist, wobei der gegenüber dem Fallrohr vergrößerte Durchmesser der Entgasungskammer erst unterhalb der oberen Mündung des Steigrohres (7) beispielsweise konisch auf den Fallrohrdurchmesser reduziert ist.

7. Vorrichtung nach einem der Ansprüche 4 und 5, mit einem Verteiler am unteren Endabschnitt des Fallrohrs (8), dadurch gekennzeichnet, daß der Verteiler (9) aus zwei übereinander angeordneten waagerechten flachen oder leicht kegelig ausgebildeten Scheiben besteht.

8. Vorrichtung nach einem der Ansprüche 4 und 5, dadurch gekennzeichnet, daß das Fallrohr (8) neben dem Steigrohr (7) angeordnet ist, wobei beide Rohre oben in an sich bekannter Weise in einer gemeinsamen Entgasungskammer (52) enden, die nach oben entweder direkt oder über eine Abgasleitung zur Atmosphäre hin offen ist.

9. Vorrichtung nach einem der Ansprüche 4 und 5, dadurch gekennzeichnet, daß über der Mündung des Gemischrohres (6) eine gegebenenfalls kegelig ausgebildete Strömungsleitvorrichtung (50) angeordnet ist.

10. Vorrichtung nach einem der Ansprüche 4 und 5, dadurch gekennzeichnet, daß die Einrichtung zur Einführung des Wasser-Luft-Gemisches in das Steigrohr (7) ejektorartig z.B. als Zentralstrahl-, Randstrahl- oder Ringstrahlejektor ausgebildet ist.

## Claims

1. Process for introducing oxygen into water, in particular into surface waters, wherein the natural layer arrangement is maintained and wherein air bubbles rising in an ascending pipe cause an upwardly directed vertical flow, whereby additional quantities of under-surface water are drawn through the bottom opening of the ascending pipe extending down into the under-surface water (hypolimnion) and are contacted on their way up with air bubbles, with the ascended residual air being able, upon delivery of part of the oxygen present, to escape into the atmosphere via the top opening of the ascending pipe, in the case of a submerged version of the apparatus via a degassing line placed upon the apparatus and extending above the surface, while the oxygenenriched water is fed into a down pipe and introduced back therethrough into the under-surface water, with the whole water circuit described above not allowing any surface water to enter, and at which a pump located outside the flow in the ascending pipe draws up under-surface water and forces it through an ejector mounted outside the ascending pipe, said ejector in turn drawing up air from the atmosphere via a snorkel line and adding it to the water, and the water/air mix is then introduced into the ascending pipe through a mix pipe, characterized in that, the water/air mix streaming upwards within the ascending pipe flows therein through at least one static mixer.

2. Process according to Claim 1, characterized in that the water/air mix is introduced into the ascending pipe through a preferably cone-shaped flow directing device, the air bubbles in the water/air mix being distributed before the first static mixer across the cross-section of the ascending pipe.

3. Process according to Claim 1, characterized in that the water/air mix is blown into the ascending pipe by ejector-like means, e.g. by a centre-jet, a perimeter-jet or a ring-jet ejector.

4. Apparatus for introducing oxygen into water, in particular into surface waters, wherein the natural layer arrangement is maintained and wherein air bubbles rising in a ascending pipe (7) cause an upwardly directed vertical flow, whereby additional quantities of under-surface water are drawn through the bottom opening of the ascending pipe (7) extending down into the under-surface water (hypolimnion) and are contacted on their way up with air bubbles, with the ascended residual air being able, upon delivery of part of the oxygen present, to escape into the atmosphere via the top opening of the ascending pipe (7), in the case of a submerged version of the apparatus via a degassing line placed upon the apparatus and extending above the surface, while the oxygen-enriched water is fed into a down pipe (8) and introduced back therethrough into the under-surface water, with the whole water circuit described above not allowing any surface water to enter, with a pump (3) for feeding under-surface water vertically through the vertical ascending pipe (7), and with an ejector (5) for drawing in atmospheric air to be introduced into the under-surface water rising in the ascending pipe (7), whereby the pump (3) is mounted outside the ascending pipe (7) and is formed either as a submerged pump drawing water directly from the surrounding environment and is itself located in the hypolimnion, or it is connected at the suction side via a suction line (2) with a suction basket (1) located in the hypolimnion, said pump (3) being connected at the pressure side via a pressure line (4) with an ejector (5) also mounted outside the ascending pipe (7), the ejector (5) being in communication with the atmosphere via a snorkel line (34) and being connected at the outlet side with a mix pipe (6), characterized in that, the mix pipe (6) terminates in the ascending pipe (7) in a ring channel (32), on which individual nozzles (33) or a circumferential annular slot nozzle are arranged either horizontally or diagonally upwards into the ascending pipe (7).

5. Apparatus for introducing oxygen into water, in particular into surface waters, wherein the natural layer arrangement is maintained and wherein air bubbles rising in an ascending pipe (7) cause an upwardly directed vertical flow, whereby additional quantities of under-surface water are drawn through the bottom opening of the ascending pipe (7) extending down into the under-surface water (hypolimnion) and are contacted on their way up with air bubbles, with the ascended residual air being able, upon delivery of part of the oxygen present, to escape into the atmosphere via the top opening of the ascending pipe (7), in the case of a submerged version of the apparatus via a degassing line placed upon the apparatus and extending above the surface, while the oxygen-enriched water is fed into a down pipe (8) and introduced back therethrough into the under-surface water, with the whole water circuit described above not allowing any surface water to enter, with a pump (3) for feeding under-surface water vertically through the vertical ascending pipe (7), and with an ejector (5) for drawing in atmospheric air to be introduced into the under-surface water rising in the ascending pipe (7), whereby the pump (3) is mounted outside the ascending pipe (7) and is formed either as a submerged pump drawing water directly from the surrounding environment and is itself located in the hypolimnion, or it is connected at the suction side via a suction line (2) with a suction basket (1) located in the hypolimnion, said pump (3) being connected at the pressure side via a pressure line (4) with an ejector (5) also mounted outside the ascending pipe (7), the ejector (5) being in communication with the atmosphere via a snorkel line (34) and being connected at the outlet side with a mix pipe (6) and terminating in the ascending pipe (7), in the bottom opening of the ascending pipe (7) or directly below the bottom opening thereof, characterized in that, within the ascending pipe (7) above the outlet of the mix pipe (6) at least one static mixer (51) is arranged therein.

6. Apparatus according to one of Claims 4 and 5, characterized in that a degassing chamber (52) is formed as an extension of the downpipe (8), the diameter of the degassing chamber, which is enlarged relative to the down pipe, being reduced not until below the upper mouth of the ascension pipe (7) e.g. in a conical shape towards the diameter of the down pipe.

7. Apparatus according to one of Claims 4 and 5, having a distributor arranged at the bottom end section of the down pipe (8), characterized in that the distributing means (9) consists of two discs arranged on top of each other in a horizontal direction and having a flat or a slightly conical shape.

8. Apparatus according to one of Claims 4 and 5, characterized in that the down pipe (8) is arranged next to the ascending pipe (7), with both pipes terminating in a common degassing chamber (52) in a manner known per se, said degassing chamber (52) being open to the atmosphere either directly or via an exhaust line.

9. Apparatus according to one of the Claims 4 and 5, characterized in that above the mouth of the mix pipe (6), flow directing means (50) are mounted which have, if necessary, a conical shape.

10. Apparatus according to one of claims 4 and 5, characterized in that the means for introducing the water/air mix into the ascending pipe (7) is formed as an ejector, e. g. as a centre-jet, a perimeter-jet or a ring-jet ejector.

## Revendications

1. Procédé pour introduire de l'oxygène dans l'eau, en particulier dans les eaux de surface, qui permet de maintenir l'étagement naturel de l'eau et dans lequel des bulles d'air qui montent à l'intérieur d'un tube élévateur produisent un courant vertical orienté vers le haut, ce qui a pour effet qu'à travers l'orifice inférieur dudit tube élévateur qui descend jusqu'au niveau de l'eau des profondeurs (hypolimnion) une quantité supplémentaire de cette eau des profondeurs se trouve aspirée et est amenée, sur son trajet ascendant, en contact avec les bulles d'air, dans lequel l'air résiduel après son ascension, après avoir cédé une partie de l'oxygène contenu, peut s'échapper dans l'atmosphère à travers l'orifice supérieur du tube élévateur et, dans la version immergée de l'appareil, à travers une conduite de dégazage rapportée et parvenant au-dessus de la surface, tandis que l'eau enrichie en oxygène est introduite dans un tube descendant et reconduite à travers celui-ci dans l'eau des profondeurs, toute pénétration d'eau de surface se trouvant empêchée dans le cycle complet venant d'être décrit, dans lequel une pompe aspire l'eau des profondeurs extérieurement au courant du tube élévateur et la refoule à travers un éjecteur disposé extérieurement audit tube élévateur, cet éjecteur aspirant lui-même éventuellement à travers une conduite du type Schnorchel, de l'air de l'atmosphère et le mélangeant à l'eau, et le mélange eau/air étant ensuite introduit par un tube mélangeur dans ledit tube élévateur, caractérisé en ce que le mélange eau/air circulant vers le haut dans le tube élévateur s'écoule à l'intérieur de celui-ci à travers au moins un mélangeur statique.

2. Procédé selon la revendication 1, caractérisé par le fait que le mélange eau/air est conduit dans le tube élévateur en passant à travers un dispositif de conduite du courant avantageusement de forme conique, les bulles d'air présentes dans le mélange eau/air étant réparties sur la section du tube élévateur en amont du premier mélangeur statique.

3. Procédé selon la revendication 1, caractérisé par le fait que le mélange eau/air est insufflé dans le tube élévateur au moyen d'un éjecteur, par exemple un éjecteur à jet central, à jet périphérique ou à jet annulaire.

4. Dispositif pour introduire de l'oxygène dans l'eau, en particulier dans les eaux de surface, qui permet de maintenir l'étagement naturel de l'eau et dans lequel des bulles d'air qui montent à l'intérieur d'un tube élévateur (7) produisent un courant vertical orienté vers le haut, ce qui a pour effet qu'à travers l'orifice inférieur dudit tube élévateur qui descend jusqu'au niveau de l'eau des profondeurs (hypolimnion) une quantité supplémentaire de cette eau des profondeurs se trouve aspirée et est amenée, sur son trajet ascendant, en contact avec les bulles d'air, dans lequel l'air résiduel après son ascension, après avoir cédé une partie de l'oxygène contenu, peut s'échapper dans l'atmosphère à travers l'orifice supérieur du tube élévateur (7) et, dans la version immergée de l'appareil, à travers une conduite de dégazage rapportée et parvenant au-dessus de la surface, tandis que l'eau enrichie en oxygène est introduite dans un tube descendant et reconduite à travers celui-ci dans l'eau des profondeurs, toute pénétration d'eau de surface se trouvant empêchée dans le cycle complet venant d'être décrit, ce dispositif comportant une pompe (23) pour le refoulement vertical de l'eau des profondeurs par le tube élévateur vertical (7) et un éjecteur (5) pour l'aspiration d'air atmosphérique à introduire dans l'eau des profondeurs montant dans le tube élévateur (7), la pompe (23) étant disposée extérieurement au tube élévateur (7) et étant soit réalisée sous la forme d'une pompe immergée aspirant directement dans son environnement immédiat et disposée elle-même dans l'hypolimnion, soit reliée par une conduite d'aspiration (2) du côté de l'aspiration, à une corbeille aspirante (1) qui se trouve dans l'hypolimnion, ladite pompe (3) étant reliée à travers une conduite de pression , du côté refoulement, à un éjecteur (5) disposé également à l'extérieur du tube élévateur (7), cet éjecteur étant en liaison directe ou par une conduite du type Schnorchel (34) avec l'atmosphère et relié du côté de la sortie à un tube mélangeur (6), caractérisé en ce que le tube de mélange débouche à l'intérieur du tube élévateur (7) dans un canal annulaire (32) sur lequel sont réalisés des buses isolées (33) orientées horizontalement ou obliquement vers le haut en direction de l'intérieur du tube élévateur (7) ou bien une buse en forme de fente annulaire périphérique.

5. Dispositif pour introduire de l'oxygène dans l'eau, en particulier dans les eaux de surface, qui permet de maintenir l'étagement naturel de l'eau et dans lequel des bulles d'air qui montent à l'intérieur d'un tube élévateur (7) produisent un courant vertical orienté vers le haut, ce qui a pour effet qu'à travers l'orifice inférieur dudit tube élévateur qui descend jusqu'au niveau de l'eau des profondeurs (hypolimnion) une quantité supplémentaire de cette eau des profondeurs se trouve aspirée et est amenée, sur son trajet ascendant, en contact avec les bulles d'air, dans lequel l'air résiduel après son ascension, après avoir cédé une partie de l'oxygène contenu, peut s'échapper dans l'atmosphère à travers l'orifice supérieur du tube élévateur (7) et, dans la version immergée de l'appareil, à travers une conduite de dégazage rapportée et parvenant au-dessus de la surface, tandis que l'eau enrichie en oxygène est introduite dans un tube descendant et reconduite à travers celui-ci dans l'eau des profondeurs, toute pénétration d'eau de surface se trouvant empêchée dans le cycle complet venant d'être décrit, ce dispositif comportant une pompe (23) pour le refoulement vertical de l'eau des profondeurs par le tube élévateur vertical (7) et un éjecteur (5) pour l'aspiration d'air atmosphérique à introduire dans l'eau des profondeurs montant dans le tube élévateur (7), la pompe (23) étant disposée extérieurement au tube élévateur (7) et étant soit réalisée sous la forme d'une pompe immergée aspirant directement dans son environnement immédiat et disposée elle-même dans l'hypolimnion, soit reliée par une conduite d'aspiration (2) du côté de l'aspiration, à une corbeille aspirante (1) qui se trouve dans l'hypolimnion, ladite pompe (3) étant reliée à travers une conduite de refoulement, du côté refoulement, à un éjecteur (5) disposé également à l'extérieur du tube élévateur (7), cet éjecteur étant en liaison directe ou par une conduite du type Schnorchel (34) avec l'atmosphère et relié du côté de la sortie à un tube mélangeur (6), lequel débouche dans le tube élévateur (7) dans l'orifice inférieur de celui-ci, caractérisé en ce que au moins un mélangeur statique (61) est disposé dans le tube élévateur (7) au-dessus de la sortie du tube mélangeur (6).

6. Dispositif selon l'une des revendications 4 ou 5, caractérisé par le fait qu'une chambre de dégazage (52) est réalisée sous la forme d'un élargissement du tube descendant (8), le diamètre de cette chambre de dégazage agrandi par rapport à celui du tube descendant ne venant se réduire, par exemple à la manière d'un cône, pour égaler le diamètre du tube descendant que sous le débouché supérieur du tube élévateur (7).

7. Dispositif selon l'une des revendications 4 ou 5, comportant un distributeur placé sur la section finale inférieure du tube descendant (8), caractérisé par le fait que le distributeur (9) est constitué de deux disques superposés, horizontaux, plats ou légèrement coniques.

8. Dispositif selon l'une des revendications 4 ou 5, caractérisé par le fait que le tube descendant (8) est disposé à côté du tube élévateur (7), les deux tubes aboutissant, d'une manière déjà connue, dans une chambre de dégazage commune (52) laquelle est ouverte vers le haut en direction de l'atmosphère, ou directement, ou à travers une conduite de dégazage.

9. Dispositif selon l'une des revendications 4 ou 5, caractérisé par le fait qu'au-dessus du débouché du tube mélangeur (6) est disposé un dispositif directeur du courant (50) également de forme conique.

10. Dispositif selon l'une des revendications 4 ou 5, caractérisé par le fait que le dispositif pour introduire le mélange eau/air dans le tube élévateur (7) est réalisé en forme d'éjecteur, par exemple en forme d'éjecteur à jet central, à jet périphérique ou à jet annulaire.
